(19) **Europäisches Patentamt**
**European Patent Office**
**Office européen des brevets**

(11) **EP 1 314 006 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.04.2016 Patentblatt 2016/14**

(45) Hinweis auf die Patenterteilung:
**03.10.2012 Patentblatt 2012/40**

(21) Anmeldenummer: **01978299.4**

(22) Anmeldetag: **23.08.2001**

(51) Int Cl.:
***G01F 23/288*** *(2006.01)*     ***G01N 9/24*** *(2006.01)*

(86) Internationale Anmeldenummer:
**PCT/EP2001/009743**

(87) Internationale Veröffentlichungsnummer:
**WO 2002/018883 (07.03.2002 Gazette 2002/10)**

(54) **VORRICHTUNG ZUR BESTIMMUNG UND/ODER ÜBERWACHUNG DES FÜLLSTANDS EINES FÜLLGUTS IN EINEM BEHÄLTER**

DEVICE FOR DETERMINING AND/OR MONITORING THE LEVEL OF A FILLING MATERIAL IN A CONTAINER

DISPOSITIF POUR DETERMINER ET/OU CONTROLER LE NIVEAU D'UN MATERIAU DE REMPLISSAGE DANS UN RESERVOIR

(84) Benannte Vertragsstaaten:
**AT BE CH CY DE DK ES FI FR GB GR IE IT LI LU MC NL PT SE TR**

(30) Priorität: **01.09.2000 DE 10043629**

(43) Veröffentlichungstag der Anmeldung:
**28.05.2003 Patentblatt 2003/22**

(73) Patentinhaber: **Endress + Hauser GmbH + Co. KG**
**79689 Maulburg (DE)**

(72) Erfinder:
- **DAMM, Hartmut**
  **79650 Schopfheim (DE)**
- **NEUHAUS, Joachim**
  **79585 Steinen (DE)**
- **KÄMEREIT, Wolfgang**
  **79650 Schopfheim (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
| | |
|---|---|
| DE-A- 2 008 411 | DE-A- 19 847 555 |
| US-A- 3 100 841 | US-A- 3 230 363 |
| US-A- 3 594 575 | US-A- 4 369 368 |
| US-A- 4 591 719 | US-A- 6 104 033 |

- **CHARLTON J.S.: 'Radioisotope Techniques for Problem-Solving in Industrial Process Plants', 1986, LEONARD HILL, GLASGOW - LONDON Seiten 205 - 246**
- **Broschüre "GammaTrol Nucleonic Systems" der Firma ICI plc., datiert März 1991**
- **Benutzerhandbuch "GammaTrol Nucleonic Systems" der Firma ICI plc., datiert 7. März 1991**

**EP 1 314 006 B2**

## Beschreibung

Die Erfindung bezieht sich auf eine Vorrichtung zur Bestimmung und/oder Überwachung des Füllstands eines Füllguts in einem Behälter, wobei eine Sendeeinheit vorgesehen ist, die radioaktive Strahlung aussendet, wobei eine Empfangseinheit vorgesehen ist, die derart angeordnet ist, daß sie die radioaktive Strahlung empfängt, und wobei eine Regel-/Auswerteeinheit vorgesehen ist, die anhand der von der Empfangseinheit gelieferten Meßdaten den Füllstand des Füllguts in dem Behälter bestimmt.

Bei der radiometrischen Füllstandsmessung bzw. bei der radiometrischen Dichtemessung wird der Behälter (Tank oder Silo), in dem das Füllgut gelagert ist, z. B. mit einer ionisierenden Strahlung durchleuchtet. Generell gibt es zwei bekannte Aufbauten: Entweder geht die Strahlung von einer punktförmigen Sendeeinheit am oberen Rand des Behälters aus und wird von einer stabförmigen Empfangseinheit (Szintillator) detektiert, die sich auf der gegenüberliegenden Seite des Behälters über die gesamte Füllhöhe erstreckt; oder die Sendeeinheit ist stabförmig und die Empfangseinheit punktförmig ausgebildet. Bei der letzten Konstellation befindet sich die Empfangseinheit bevorzugt im oberen Bereich des Behälters.

Die Empfangseinheit besteht entweder aus Kunststoff oder aus einem Kristall. In jedem Fall wird die aus dem Behälter kommende oder durch den Behälter gehende $\gamma$-Strahlung in der Empfangseinheit zumindest teilweise absorbiert. Die absorbierte Strahlung wird teilweise wieder in Form von UV-Licht abgegeben. Da die Transmission in Kunststoff für UV-Licht sehr gering ist, wird üblicherweise in den Kunststoff zusätzlich ein Wellenlängenschieber eingebaut. Dieser Wellenlängenschieber wandelt das UV-Licht in sichtbares Licht (in der Regel in blaues oder grünes Licht) um. Das gewandelte Licht kann nachfolgend z. B. mit einem Photomultiplier in elektrische Signale umgewandelt werden. Die elektrischen Signale werden dann in einer elektronischen Schaltung ausgewertet. Zwecks Auswertung wird im Normalfall die Anzahl der Lichtimpulse gezählt. Eine weitere Möglichkeit der Auswertung besteht darin, das Amplitudenspektrum, d.h. die Anzahl der Impulse, sortiert nach ihrer Amplitude, zu untersuchen. In beiden Fällen wird stets die gesamte Strahlung bewertet, welche den Behälter und das in dem Behälter befindliche Füllgut passiert hat. Je nach Füllstand oder Dichte des Füllguts ist demnach der Anteil der absorbierten Strahlung mehr oder weniger groß.

Die bekannten radiometrischen Füllstandsmeßgeräte zeigen die folgenden Nachteile:

- Das Meßergebnis wird durch die Temperaturabhängigkeit und die Empfindlichkeit des Detektors beeinflußt.
- Werden relativ lange Kunststoffstäbe als Empfangseinheit eingesetzt, so wird ein großer Anteil des Lichts absorbiert; eine Amplitudenauswertung ist dann wenig sinnvoll.
- Fremdquellen, die nicht zum Meßaufbau gehören, verfälschen das Meßergebnis.
- Unterschiedliche Wandstärken des Behälters müssen durch aufwendige Berechnungen kompensiert werden.
- Da die Intensität der Strahlung mit dem Quadrat der Entfernung zwischen Sendeeinheit und Empfangseinheit abnimmt, muß eine Linearisierung des Meßergebnisses vorgenommen werden.
- Ein weiterer Nachteil besteht darin, daß mit zunehmender Stablänge der Einfallswinkel der Strahlung auf die Behälterwand größer wird. Dadurch erhöht sich die Weglänge in der Behälterwand und damit die Absorption. Da die Absorptionsfunktion expoentiell verläuft, nimmt dieser Effekt mit größer werdender Wandstärke überproportional zu.

Aufgrund der zuvorgenannten Zusammenhänge nimmt die Meßgenauigkeit des Systems mit zunehmendem Abstand von der Sendeeinheit ab, was bedeutet, daß die Meßgenauigkeit im oberen Bereich des Behälters größer ist als im unteren Bereich. Das Verhältnis von Füllhöhe zu Behälterdurchmesser ist auf ca. 1/1 begrenzt. Die Konsequenz davon ist, daß bei einer Messung über einen ausgedehnten Füllstandsbereich mehrere Sendeeinheiten erforderlich sind. Grob läßt sich sagen, daß aufgrund der Absorption des Lichts im Kunststoffstab der Meßbereich einer einzelnen Detektoreinheit auf ca. 2 m begrenzt ist.

Darüber hinaus ist in der US 6,104, 033 eine Vorrichtung zur Bestimmung der Füllhöhen von zwei oder mehr Füllgütern in einem Behälter bekannt. Die Vorrichtung umfasst mehrere Sendeeinheiten, die im Messbetrieb nacheinander radioaktive Strahlung durch den Behälter senden, und eine aus einzelnen in unterschiedlichen Abständen vom Behälterboden positionierten Detektoreinheiten bestehende Empfangseinheit. Dabei empfangen die Detektoreinheiten jeweils den Strahlungsanteil, den die jeweils gerade sendende Sendeeinheit in deren Richtung abstrahlt, und der durch einen definierten Teilbereich des Behälters hindurchgeht. Es werden die Messdaten der einzelnen Detektoreinheiten gesammelt und hieraus über ein numerisches Auswerteverfahren, in dem eine Beziehung zwischen den mit den einzelnen Detektoreinheiten gemessenen Intensitäten und den mittleren Dichten der auf den jeweils von der Position der jeweils sendenden Sendeeinheit und der jeweiligen Detektoreinheit abhängigen Strahlungspfaden durchdrungenen Medien hergestellt wird, die Füllhöhen bestimmt.

Desweiteren ist in der US 4,369,368 eine Vorrichtung zur Messung eines Füllstandes eines Füllguts in einem Behälter beschrieben, bei der auf einer Seite des Behälters N über die Höhe des Füllstandsmessbereichs verteilt angeordnete Sendeeinheiten vorgesehen sind, deren radioaktive Strahlung den Behälter jeweils diametral durchstrahlt. Auf einer den Sendeeinheiten diametral gegenüberliegenden Seite des Behälters sind Detektoreinheiten angeordnet, deren Anzahl größer als die Anzahl der Sendeeinheiten ist. Jede Dektektoreinheit weist vorzugsweise einen Kollimator auf, der bewirkt, dass sie im Wesentlichen nur die Strahlung der auf gleicher Höhe gegenüberliegend angeordneten Sendeeinheit empfängt. Anhand der von den Detektoreinheiten gemessenen Intensitäten wird ein ein Dichteprofil des Füllguts bestimmt. Darüber hinaus ist erwähnt, dass es möglich ist, anhand der als Funktion der Höhe bestimmten gemessenen Intensitäten den Füllstand zu bestimmen.

Der Erfindung liegt die Aufgabe zugrunde, eine Vorrichtung vorzuschlagen, die eine verläßliche Messung des Füllstands eines Füllguts, das in einem Behälter angeordnet ist, ermöglicht.

Die Aufgabe wird durch eine Vorrichtung gemäß Anspruch 1 gelöst.

Gemäß einer vorteilhaften Weiterbildung der erfindungsgemäßen Vorrichtung handelt es sich bei einer Detektoreinheit um einen Festkörperdetektor oder um einen Flüssigkeitsdetektor. Insbesondere ist es möglich, als Detektoreinheit einen Kunststoffszintillator oder einen Kristallszintillator mit einem nachgeschalteten Photomulitiplier oder mit einer nachgeschalteten PIN-Diode zu verwenden. Ebenso gut kann als Detektoreinheit auch eine Ionisationskammer verwendet werden. Als besonders günstig wird es jedoch angesehen, wenn es sich bei einer Detektoreinheit um einen Halbleiterdetektor, z. B. um einen CdZnTe-Detektor handelt.

Halbleiterdetektoren zeichnen sich durch eine Vielzahl von Vorteilen aus, die im nachfolgenden aufgelistet sind:

- Es tritt keine Szintillation auf, d.h. es erfolgt kein Umweg über die Licht-detektion. Vielmehr werden die freigesetzten Elektronen im Halbleiter direkt ausgewertet.
- Mit einem CdZnTe-Detektor können Energien bis 1.3 MeV gemessen werden (z. B. Co60).
- Halbleiterdetektoren sind bis zu einer Temperatur von 70° einsetzbar.
- Alterungserscheinungen sind bislang nicht bekannt, was bedeutet, daß Halbleiterdetektoren stabiler sind als z. B. Photomultiplier.
- Als Bias-Spannnungen sind Werte von 100V bis 300 V pro mm Tiefe notwendig. Spannungsänderungen wirken sich daher nur in geringem Maße auf die Meßergebnisse aus.
- Die Bias-Spannungsversorgung bei Halbleiterdetektoren benötigt im Vergleich zu Photomultipliern eine sehr geringe Leistung.
- Halbleiterdetektoren sind nicht hygroskopisch und chemisch in hohem Maße stabil.
- Halbleiterdetektoren weisen einen linearen Temperaturkoeffizienten auf; eine Temperaturkompensation ist daher elektronisch auf einfache Art und Weise möglich.
- Halbleiterdetektoren zeichnen sich durch eine hohe Energieauflösung und eine kompakte Bauform aus.
- Halbleiterdetektoren benötigen zum Betrieb kein Vakuum; weiterhin besteht natürlich auch keine Glasbruchgefahr - was z. B. ein großes Problem bei Photomultipliern darstellt.

Nachteilig bei gewissen Anwendungen von Halbleiterdetekoren mag sein, daß sie infolge der kleinen Bauform - die übliche Kristallgröße liegt bei 15x15x3mm - im Gegensatz zu einem z. B. NaJ-Kristall eine relativ geringe Empfindlichkeit aufweisen. Dieser Nachteil läßt sich jedoch einfach dadurch beseitigen, daß eine Detektoreinheit aus mehreren Einzeldetektoren zusammengesetzt wird, wobei die Einzeldetektoren so angeordnet sind, daß sie ein Detektorarray bilden. Beispielsweise sind vier Einzeldetektoren zu einem rechteckigen Detektorarray zusammengesetzt bzw. zusammengeschaltet. Selbstverständlich ist es jedoch auch - je nach Anwendungsfallmöglich, daß die Detektoreinheit aus einem Einzeldetektor besteht.

Gemäß einer vorteilhaften Weiterbildung der erfindungsgemäßen Vorrichtung ist zumindest eine erste zusätzliche Detektoreinheit vorgesehen, die oberhalb einer vorgegebenen maximalen Füllhöhe des Füllguts in dem Behälter angeordnet ist, wobei die erste zusätzliche Detektoreinheit im wesentlichen nur die von der Sendeeinheit emittierte radioaktive Strahlung empfängt, die mit dem Füllgut nicht in Wechselwirkung getreten ist. Diese zusätzliche Detektoreinheit kann einmal dazu genutzt werden, den Einfluß des Druckes, der im füllgutfreien Innenraum des Behälters herrscht, bei der Füllstands- bzw. Dichtemessung zu berücksichtigen. Die Kenntnis des Druckes ist insofern von großer Wichtigkeit, als die Absorption der radioaktiven Strahlung in Gasen stark druckabhängig ist. Kennt man den Druckeinfluß, lassen sich die Meßdaten entsprechend korrigieren. Selbstverständlich kann anstelle der ersten zusätzlichen Detektoreinheit auch ein ganz normaler Drucksensor zum Einsatz kommen. Hierbei ist wiederum lediglich zu beachten, daß sich der Drucksensor oberhalb der maximalen Füllhöhe des Füllguts in dem Behälter befindet.

Eine bevorzugte Ausgestaltung der erfindungsgemäßen Vorrichtung sieht eine zweite zusätzliche Detektoreinheit vor, die so angeordnet ist, daß sie im wesentlichen nur die radioaktive Hintergrundstrahlung in der unmittelbaren Umgebung des Behälters detektiert. Hierdurch läßt sich der Einfluß unerwünschter radioaktiver Strahlungsquellen erkennen, so daß die Füllstands- bzw. die Dichtemeßdaten entsprechend korrigiert werden können.

Wie bereits zuvor erwähnt, besteht ein wesentlicher Vorteil der erfindungsgemäßen Lösung darin, daß jede einzelne Detektoreinheit jeweils nur die Strahlung empfängt, die in ihre Richtung abgegeben wird. Dadurch ist es möglich, ein Intensitätsprofil über den gesamten Füllstandsmeßbereich zu erstellen. Eine höhere Ortsauslösung läßt sich übrigens dadurch erreichen, daß zwischen den von z. B. zwei Detektoreinheiten - die beiden Detektoreinheiten können beispielsweise benachbart sein - gelieferten Meßdaten eine Interpolation durchgeführt wird. Bevorzugt ist der Abstand zwischen zwei aufeinanderfolgenden Detektoreinheiten variabel ausgestaltet ist, wobei der Abstand auf die jeweils gewünschte Ortsauslösung abgestimmt ist. Selbstverständlich kann der Abstand zwischen zwei aufeinanderfolgenden Detektoreinheiten auch über den gesamten Füllstandsmeßbereich konstant gehalten sein.

Als besonders günstig hat sich die Ausführungsform der erfindungsgemäßen Vorrichtung erwiesen, bei der die Detektoreinheiten in einer vorgegebenen Anzahl auf einem Halteelement angeordnet sind. Hierdurch wird die Montage der Empfangseinheit an der Behälterwand oder in unmittelbarer Umgebung zum Behälter erheblich erleichtert. Eine bevorzugte Weiterbildung der erfindungsgemäßen Vorrichtung schlägt vor, daß das Halteelement flexibel ausgestaltet ist. Bei einer flexiblen Ausgestaltung läßt sich die Empfangseinheit an jede beliebige Behälterform problemlos anpassen.

Einige Detektoreinheiten, beispielsweise Photomultiplier, weisen eine relativ starke Temperaturabhängigkeit auf. Hier hat es sich als sehr vorteilhaft erwiesen, wenn jeder Detektoreinheit ein Temperatursensor zugeordnet ist, der die Temperatur am Meßort bestimmt. Aufgrund der ermittelten Temperaturmeßdaten kann die Regel-/Auswerteeinheit nachfolgend die am Meßort herrschende Temperatur bei der Auswertung der Füllstands- oder der Dichtemeßdaten berücksichtigen. Wiederum trägt diese Option zu einer Verbesserung der Meßgenauigkeit bei.

Gemäß einer bevorzugten Weiterbildung der erfindungsgemäßen Vorrichtung ist eine Busleitung vorgesehen, über die die Detektoreinheiten ihre Meßdaten an die Regel-/Auswerteeinheit weiterleiten. Bei der Datenübermittlung bzw. bei der Datenkommunikation können selbstverständlich die bekannten Übertragungsstandards, z. B. Profibus PA, Fieldbus Foundation, usw. eingesetzt werden.

Eine vorteilhafte Ausgestaltung der erfindungsgemäßen Vorrichtung schlägt eine Eingabe-/Ausgabeeinheit vor, über die das Bedienpersonal eine beliebige Detektoreinheit als Überfüllsicherung auswählen kann; nachfolgend erzeugt die Regel-/Auswerteeinheit über die Eingabe-/Ausgabeeinheit eine entsprechende Meldung/Warnung, sobald der vorgegebene Füllstand erreicht ist.

Als besonders günstig hat es sich darüber hinaus herausgestellt, wenn die Regel-/Auswerteeinheit die Meßdaten der einzelnen Detektoreinheiten bei leerem Behälter bestimmt und ein entsprechendes Leerprofil erstellt; ein analoges Meßprofil wird anschließend bei befülltem Behälter gewonnen. In einem letzten Schritt vergleicht die Regel-/Auswerteeinheit das Meßprofil mit dem Leerprofil und kann so Information über die Bildung von Schaum oberhalb des Füllguts oder über die Bildung von Ansatz an der Behälterwand bereitstellen.

Weiterhin ist vorgesehen, daß die Regel-/Auswerteeinheit ein Dichteprofil des in dem Behälter angeordneten Füllguts erstellt und daß die Regel-/Auswerteeinheit dem Bedienpersonal das Dichteprofil zwecks Prozeßanalyse und/oder zu Regelungszwecken zur Verfügung stellt.

Die Erfindung wird anhand der nachfolgenden Zeichnungen näher erläutert. Es zeigt:

Fig. 1: eine schematische Darstellung einer ersten Ausgestaltung der erfindungsgemäßen Vorrichtung,

Fig. 2: ein Diagramm, welches das Intensitätsprofil bei leerem und bei befülltem Behälter darstellt,

Fig. 3: ein Diagramm, welches das Intensitätsprofil bei leerem und bei befülltem Behälter im Falle einer Schaumbildung auf dem Füllgut darstellt,

Fig. 4: eine schematische Darstellung einer zweiten Ausgestaltung der erfindungsgemäßen Vorrichtung,

Fig. 5: eine schematische Darstellung einer dritten Ausgestaltung der erfindungsgemäßen Vorrichtung und

Fig. 6: eine Draufsicht auf eine als Detektorarray ausgebildete Detektoreinheit.

Fig. 7: ein Blockschaltbild einer Ausgestaltung der erfindungsgemäßen Vorrichtung und

Fig. 8: eine Ausführungsform der erfindungsgemäßen Vorrichtung zur Bestimmung der Dichte eines Mediums.

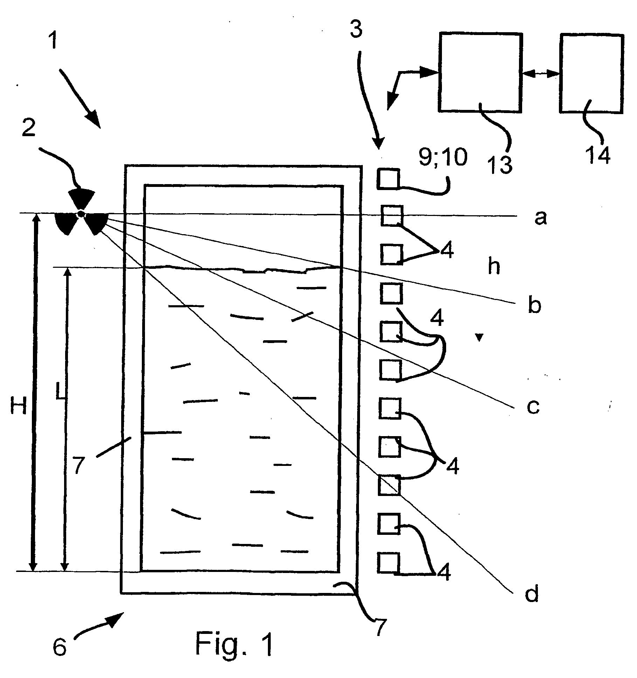

Fig. 1 zeigt eine schematische Darstellung einer ersten Ausgestaltung der erfindungsgemäßen Vorrichtung 1. Das Füllgut 8 ist in dem Behälter 6 gelagert. Die momentane Füllhöhe des Füllguts 8 in dem Behälter 6 ist mit L gekennzeichnet.

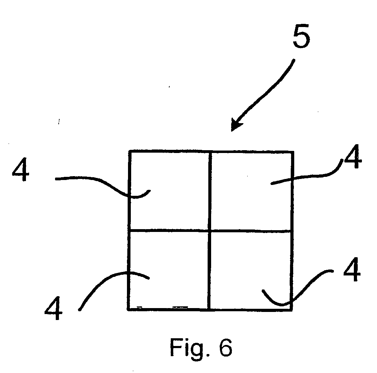

Im oberen Bereich des Behälters 6 ist eine punktförmige Sendeeinheit 2 angeordnet, die radioaktive Strahlung aussendet. Die radioaktive Strahlung durchdringt die Behälterwand 7 und den Innenraum des Behälters 6 und wird von den Detektoreinheiten 4, die auf der gegenüberliegenden Seite des Behälters 6 angeordnet sind, empfangen. Bei den Detektoreinheiten 4 handelt es sich entweder um Einzeldetektoren oder um Detektorarrays 5, die sich aus mehreren Einzeldetektoren zusammensetzen. In der Fig. 6 ist übrigens eine mögliche Ausgestaltung eines Detektorarrays 5 dargestellt.

Die kleinen Buchstaben a, b, c, d kennzeichnen beispielhaft vier unterschiedliche Wege, die die Strahlung durch den Behälter nimmt, bevor sie von den entsprechenden Detektoreinheiten 4 empfangen wird. Es versteht sich von selbst, daß der Strahlungsanteil, der zu einer Detektoreinheit 4 gelangt, um so geringer wird, je größer der Weg ist, den die Strahlung durch das Füllgut 8 und die Behälterwand 7 zurücklegen mußte. Im gezeigten Fall bedeutet dies konkret, daß die Strahlung, die mit a und b charakterisiert ist, weitgehend ungeschwächt empfangen wird, während die Strahlung, die die Wege c und d zurückgelegt hat, durch die Wechselwirkung mit dem Füllgut 8 eine mehr oder weniger starke Absorption erfahren hat.

Oberhalb der maximal möglichen Füllhöhe H ist eine erste zusätzliche Detektoreinheit 9 vorgesehen, die stets Strahlung empfängt, die nicht mit dem Füllgut 8 in Wechselwirkung getreten ist. Diese Detektoreinheit 9 dient dazu, den jeweils absorbierten Strahlungsanteil zu erkennen, der infolge von Druckschwankungen im füllgutfreien Innenraum des Behälters 6 auftritt.

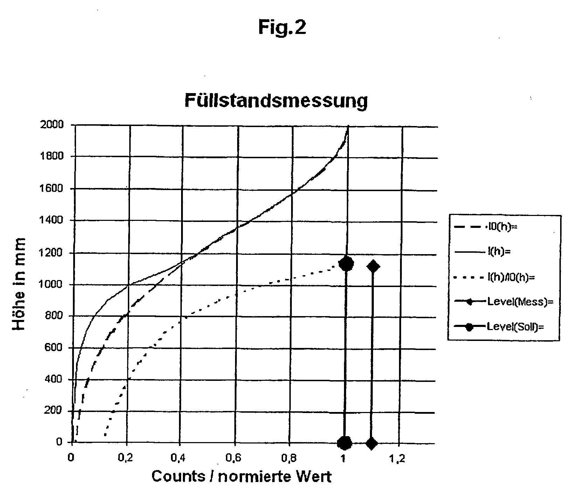

Fig. 2 zeigt ein Diagramm, welches das Intensitätsprofil über die gesamte Füllhöhe H bei leerem und bei befülltem Behälter 6 wiedergibt. Wie bereits zuvor erwähnt, kann mittels der erfindungsgemäßen Vorrichtung 1 ein Intensitätsprofil über den gesamten Füllstands- bzw. Dichtemeßbereich erstellt werden, da jede Detektoreinheit 4 nur die Strahlung empfängt, die von der Sendeeinheit 2 in ihre Richtung abgegeben wird. In der Fig. 2 sind übrigens die folgenden Kurven dargestellt:

- I(0): Signalverlauf bei leerem Tank (Nullkurve)
- I(h): Signalverlauf bei teilweise gefülltem Tank (Meßkurve)
- I(h)/I0(h): Division der Meßkurve durch die Nullkurve
- Level(Soll): tatsächlicher Füllstand L
- Level(Mess): aus der Meßkurve abgeleiteter Füllstand

Die Vorgehensweise, wie der aktuelle Füllstand L erfindungsgemäß ermittelt wird, ist bevorzugt die folgende:

Bei der ersten Inbetriebnahme wird ein sog Nullabgleich durchgeführt. Hierzu wird die Nullkurve bei leerem Behälter 6 ermittelt; die Meßdaten der Nullkurve werden gespeichert. Die Nullkurve spiegelt also den Intensitätsverlauf über den gesamten Füllstandsmeßbereich bei leerem Behälter 6 wider.

Anschließend wird bei befülltem Behälter 6, wobei die aktuelle Füllhöhe mit L gekennzeichnet ist, die aktuelle Meßkurve aufgenommen. Zwecks Füllstandsbestimmung werden die Meßdaten der aktuellen Meßkurve durch die entsprechenden Meßdaten der Nullkurve dividiert. Das Ergebnis der Division ist in dem Meßbereich, in dem kein Füllgut 8 vorhanden ist, immer gleich 1. In allen Meßbereichen, in denen Füllgut 8 vorhanden ist, sind die ermittelten Werte kleiner als 1. Der Übergang von 1 zu Werten kleiner als 1 entspricht somit dem aktuellen Füllstand L in dem Behälter 6. Durch den Nullabgleich wird es übrigens ermöglicht, den Einfluß der Behältergeometrie (z. B. durch unterschiedliche Wandstärken, Flansche oder Einbauten im Behälter 6) automatisch bei der Füllstands- oder Dichtebestimmung zu berücksichtigen.

Um Schwankungen in der Strahlungsintensität der Sendeeinheit oder um den Einfluß von Druckschwankungen im füllgutfreien Innenraum des Behälters 6 zu kompensieren, wird weiterhin der Meßwert einer ersten zusätzlichen Detektoreinheit 9 zur Normierung verwendet. Damit die erste zusätzliche Detektoreinheit 9 verläßliche Meßdaten bereitstellt, muß lediglich sichergestellt sein, daß sie oberhalb der maximal möglichen Füllhöhe H des Füllguts 8 in dem Behälter 6 angeordnet ist.

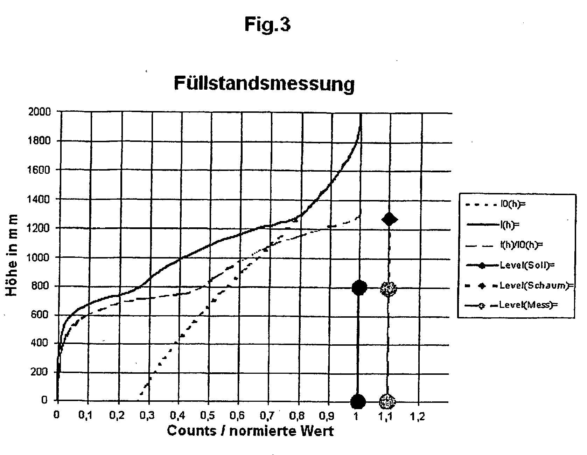

Fig. 3 zeigt ein Diagramm, welches das Intensitätsprofil bei leerem und befülltem Behälter im Falle einer Schaumbildung auf dem Füllgut 8 darstellt. Schaumbildung tritt bei einer Vielzahl von chemischen Prozessen auf und ist in der Regel unerwünscht, da hierdurch die Füllstands- oder die Dichtemeßdaten verfälscht werden. Mit den bislang bekannten radiometrischen Meßgeräten war übrigens eine Schaumdetektion nicht möglich. Bei der erfindungsgemäßen Vorrichtung läßt sich der Schaum anhand eines zweiten Knicks in der aktuellen Meßkurve erkennen. Ein entsprechendes Signal kann über die Regel-/Auswerteeinheit 13 und die Eingabe-/Ausgabeeinheit 14 an das Bedienpersonal weitergegeben werden.

Übrigens ist eine Ansatzbildung an den Behälterwänden 7 dadurch erkennbar, daß sich der typische Verlauf der Meßkurve ändert.

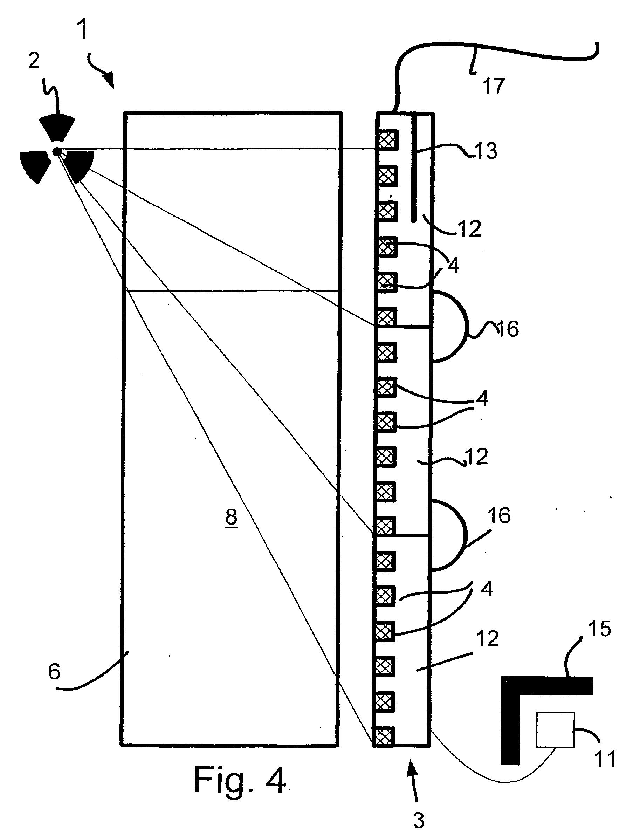

In Fig. 4 ist eine schematische Darstellung einer zweiten Ausgestaltung der erfindungsgemäßen Vorrichtung 1 zu sehen. Diese Ausgestaltung unterscheidet sich von der in Fig. 1 gezeigten insofern, als mehrere Detektoreinheiten 4 auf je einem Halteelement 12 angeordnet sind, wobei die einzelnen Halteelemente 12 so positioniert sind, daß die Detektoreinheiten 4 den gesamten Meßbereich abdecken können. Die Kaskadierung der Einzeldetektoren erfolgt im dargestellten Fall übrigens über eine Busleitung 16. Die Busleitung 16 kann sowohl einzeln gehäuste Detektoreinheiten 4 wie auch mehrere Detektoreinheiten 4, die ein Detektorarray 5 bilden oder die auf einem Halteelement 12 angeordnet sind, miteinander verbinden. Aufgrund dieser Ausgestaltung ist bei prinzipiell unbegrenztem Meßbereich nur eine Regel-/Auswerteeinheit 13 erforderlich. Die Regel-/Auswerteeinheit 13 fragt die Detektoreinheiten 4 nacheinander ab und wertet die übermittelten Meßdaten nachfolgend aus.

Nachträgliche Erweiterungen des Meßbereichs sind bei dieser Ausgestaltung jederzeit problemlos möglich. Über die Busleitung 17 erfolgt die Kommunikation mit einer in Fig. 4 nicht gesondert dargestellten entfernten Kontrollstelle.

In Fig. 4 ist auch eine zweite zusätzliche Detektoreinheit 11 zu sehen, die die Hintergrundstrahlung in der unmittelbaren Umgebung des Behälters 6 empfängt. Die von der zweiten zusätzlichen Detektoreinheit 11 bereitgestellten Meßdaten werden gleichfalls zu Korrekturzwecken herangezogen.

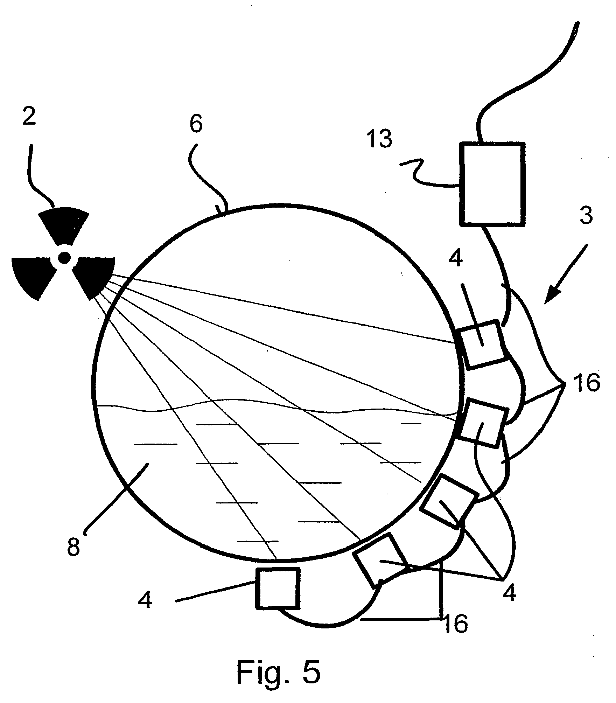

Fig. 5 zeigt eine schematische Darstellung einer dritten Ausgestaltung der erfindungsgemäßen Vorrichtung 1. Der Unterschied zu den Ausführungsformen, die in den Figuren Fig. 1 und Fig. 4 dargestellt sind, besteht vorrangig in der Geometrie des Behälters 6.

Neben der Füllstandsmessung bzw. der Füllstandsüberwachung eines Füllguts 8 in einem Behälter 6 ist die erfindungsgemäße Vorrichtung bestens für die Dichtemessung bzw. für die Dichteüberwachung eines Füllguts 8 geeignet. Zur Verdeutlichung sei auf das folgende Beispiel verwiesen: In Wirbelschichtreaktoren ist die Dichte des Füllguts 8 über der Füllhöhe L im Normalfall nicht konstant. Durch die Aufwirbelung befinden sich im oberen Bereich des Behälters 6 bzw. des Reaktors überwiegend Gase oder Staubwolken, während im unteren Bereich das Füllgut 8 dicht gepackt ist. Bei herkömmlichen Meßgeräten wird dieser Effekt nur ungenügend beachtet, indem angenommen wird, daß der Dichteverlauf einer vorbestimmten Linearisierungskennlinie entspricht. Der tatsächliche Dichteverlauf über die Füllhöhe bleibt jedoch unberücksichtigt.

Durch die erfindungsgemäße Vorrichtung kann einerseits der tatsächliche Dichteverlauf bestimmt werden; andererseits ist es aber auch erstmals möglich, den Füllstand selbst bei variablen Dichteverlauf exakt zu bestimmen.

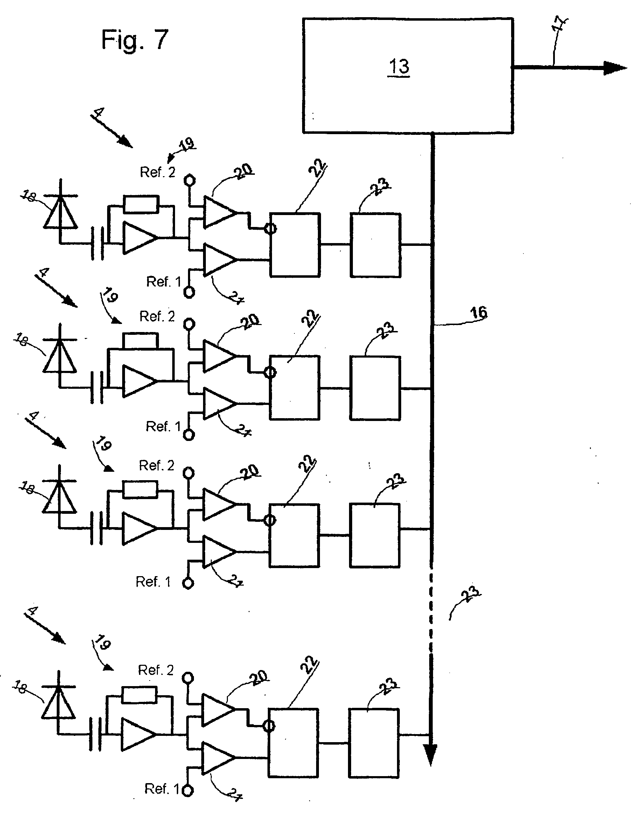

Fig. 7 zeigt ein Blockschaltbild einer Ausgestaltung der erfindungsgemäßen Vorrichtung 1. Der von einem Detektorelement 18 - bei dem Detektorelement 18 handelt es sich z. B. um einen CdZnTe-Detektor - detektierte Strahlungsanteil steht am Ausgang des Detekorelements 18 als Strommeßsignal zur Verfügung. Das Strommeßsignal wird in dem Verstärker 19 (Strom-Spannungs-Wandler) verstärkt. Anschließend wird das verstärkte Meßsignal auf den Differentiator 20 und parallel auf den Komparator 21 gegeben. Während der Differentiator 20 die hochenergetischen Störsignale (z. B. die kosmische Strahlung) aus dem Meßsignal entfernt, unterdrückt der Komparator 21 die niederenergetischen Rauschanteile. Die Ausgänge des Differentiators 20 und des Komparators 21 liegen an den Eingängen eines AND-Gatters 22. Am Ausgang des AND-Gatters 22 stehen folglich nur Signale an, die innerhalb eines durch die Referenzwerte Ref 1 und Ref 2 definerten Energiebereichs liegen. Bei dem Mikroprozessor 23 kann es sich beispielsweise um einen Zähler handeln. Die Signale werden über eine Busleitung 16 an die Regel-/Auswerteeinheit 13 weitergeleitet.

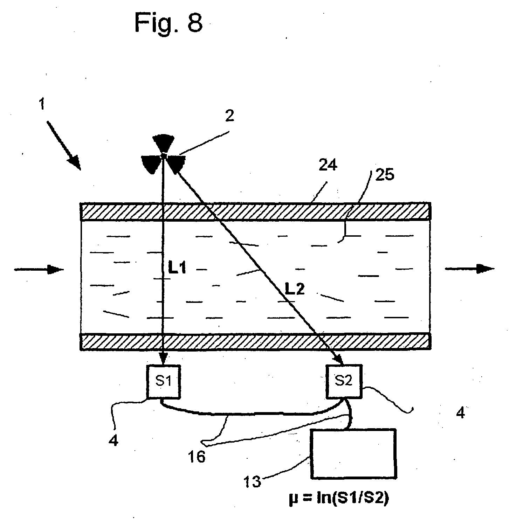

In Fig. 8 ist eine Ausführungsform der erfindungsgemäßen Vorrichtung 1 zur Bestimmung der Dichte ρ eines Mediums 25 dargestellt. Im gezeigten Fall handelt es sich bei dem Behälter 24 um ein Rohr, das von einem z.B. flüssigen Medium 25 durchflossen wird. Auf der einen Seite des Behälters 24 ist die Sendeeinheit 2 angeordnet. Die Sendeeinheit 2 emittiert die radioaktive Strahlung, die durch das Rohr und das Medium 25 hindurchgeht. Auf der gegenüberliegenden Seite des Behälters 24 sind zwei Detektoreinheiten 4 positioniert. Die Detektoreinheiten 4 sind so angeordnet, daß die radioaktive Strahlung unterschiedlich lange Wege durch das Medium 25 zurücklegen muß, bevor sie von den beiden Detektoreinheiten 4 detektiert wird. Bekanntlich nimmt die Intensität von Strahlung bei Durchgang durch ein Medium 25 exponentiell ab. Die Extinktionsformel lautet:

$$I_{(d)} = I_0 \cdot e^{-\mu \cdot d}$$

Wobei I (d) die gemessene Intensität der Strahlung ist, nachdem sie den Weg d durch das Medium 25 der Dichte ρ zurückgelegt hat, wobei $I_0$ die Ausgangsintensität der Sendeeinheit 2 ist und wobei μ den Extinktionsfaktor beschreibt.

Da die Strahlungsanteile infolge der verschieden langen Wege durch das Medium 25 unterschiedlichen Intensitäten aufweisen, läßt sich durch eine Division der Meßwerte der beiden Detektoreinheiten 4 die Extinktion μ des Mediums 25 bestimmen. Da die Extinktion μ eine Funktion der Dichte ρ des Mediums 25 ist, läßt sich folglich die Dichte ρ des Mediums 25 ermitteln.

**Patentansprüche**

1. Vorrichtung (1) zur Bestimmung und/oder Überwachung des Füllstands eines Füllguts (8) in einem Behälter (6),

       - wobei eine Sendeeinheit (2) vorgesehen ist, die radioaktive Strahlung aussendet,
       - wobei eine Empfangseinheit (3) vorgesehen ist, die derart angeordnet ist, daß sie die radioaktive Strahlung empfängt,

- wobei eine Regel/Auswerteeinheit (13) vorgesehen ist, die anhand der von der Empfangseinheit (3) gelieferten Meßdaten den Füllstand des Füllguts (8) in dem Behälter (6) bestimmt, und
- wobei die Empfangseinheit (3) aus einzelnen Detektoreinheiten (4) besteht,
-- wobei die Detektoreinheiten (4) in unterschiedlichen Abständen vom Boden des Behälters (6) positioniert sind, so daß die jede Detektoreinheit (4) den Strahlungsanteil detektiert, den die Sendeeinheit (2) in deren Richtung abstrahlt und der durch einen definierten Teilbereich des Behälters (6) hindurchgeht,

**dadurch gekennzeichnet, dass**

- die Regel-/Auswerteeinheit (13) derart ausgestaltet ist, dass sie die Detektoreinheiten (4) über eine Busleitung nacheinander abfragt, und die übermittelten Messdaten nachfolgend auswertet,
- die Sendeeinheit (2) eine im oberen Bereich des Behälters (6) angeordnete punktförmige Sendeeinheit (2) ist, und
- die Regel-/Auswerteeinheit (13) derart ausgestaltet ist, dass sie ein Intensitätsprofil ($I(h)$) über die Höhe des gesamten Füllstandsmessbereich erstellt, und anhand des Intensitätsprofils ($I(h)$) und eines vorab bei leerem Behälter (6) bestimmten und gespeicherten Intensitätsverlaufs ($I_0(h)$) über den Füllstandsmessbereich ein Verhältnis ($I(h)/I_0(h)$) des Intensitätsprofils ($I(h)$) zum Intensitätsverlauf ($I_0(h)$) bestimmt und den Füllstand anhand eines Übergangs des Verhältnisses ($I(h)/I_0(h)$) zu Werten kleiner eins bestimmt.

2. Vorrichtung nach Anspruch 1, **dadurch gekennzeichnet, dass** es sich bei einer Detektoreinheit (4) um einen Festkörperdetektor oder einen Flüssigkeitsdetektor handelt.

3. Vorrichtung nach Anspruch 1,
**dadurch gekennzeichnet,**
**daß** es sich bei einer Detektoreinheit (4) um einen Kunststoffszintillator oder um einen Kristallszintillator mit einem nachgeschalteten Photomulitiplier oder mit einer nachgeschalteten PIN-Diode handelt.

4. Vorrichtung nach Anspruch 1 oder 2,
**dadurch gekennzeichnet,**
**daß** es sich bei einer Detektoreinheit (4) um einen Halbleiterdetektor, z. B. um einen GdZnTe-Detektor handelt.

5. Vorrichtung nach Anspruch 1, 2, 3 oder 4,
**dadurch gekennzeichnet,**
**daß** die Detektoreinheiten (4) entweder Einzeldetektoren sind, oder aus mehreren Einzeldetektoren zusammensetzt sind, die so angeordnet sind, daß sie ein Detektorarray (5) bilden.

6. Vorrichtung nach Anspruch 1, 2, 3, 4, oder 5,
**dadurch gekennzeichnet,**
**daß** zumindest eine erste zusätzliche Detektoreinheit (9) vorgesehen ist, die oberhalb einer vorgegebenen maximalen Füllhöhe (H) des Füllguts (8) in dem Behälter (6) angeordnet ist, wobei die erste zusätzliche Detektoreinheit (9) im wesentlichen nur die von der Sendeeinheit (2) emittierte radioaktive Strahlung empfängt, die mit dem Füllgut (8) nicht in Wechselwirkung getreten ist.

7. Vorrichtung nach Anspruch 1, 2, 3, 4, oder 5,
**dadurch gekennzeichnet,**
**daß** ein Drucksensor (10) vorgesehen ist, der oberhalb einer maximalen Füllhöhe (H) des Füllguts (8) in dem Behälter (6) angeordnet ist.

8. Vorrichtung nach Anspruch 1, 6 oder 7,
**dadurch gekennzeichnet,**
**daß** zumindest eine zweite zusätzliche Detektoreinheit (11) vorgesehen ist, die so angeordnet ist, daß sie im wesentlichen nur die radioaktive Hintergrundstrahlung in der unmittelbaren Umgebung des Behälters (6) detektiert.

9. Vorrichtung nach Anspruch 1, 2, 3, 4, oder 5,
**dadurch gekennzeichnet,**
**daß** der Abstand zwischen zwei aufeinanderfolgenden Detektoreinheiten (4) variabel ausgestaltet ist, wobei der Abstand auf die jeweils gewünschte Ortsauslösung abgestimmt ist.

**10.** Vorrichtung nach Anspruch 1, oder 9,
**dadurch gekennzeichnet,**
**daß** die Detektoreinheiten (4) in einer vorgegebener Anzahl auf einem Halteelement (12) angeordnet sind, wobei das Halteelement (12) vorzugsweise flexibel ausgestaltet ist.

**11.** Vorrichtung nach einem oder mehreren der vorhergehenden Ansprüche,
**dadurch gekennzeichnet, daß**

- die Detektoreinheiten (4) eine Temperaturabhängigkeit aufweisen,
- jeder Detektoreinheit (4) ein Temperatursensor zugeordnet ist, der die Temperatur am Meßort bestimmt, und
- die Regel-/Auswerteeinheit (13) die am Meßort herrschende Temperatur bei der Auswertung der Füllstands-Meßdaten berücksichtigt.

**12.** Vorrichtung nach einem oder mehreren der vorhergehenden Ansprüche,
**dadurch gekennzeichnet,**
**daß** eine Busleitung (17) vorgesehen ist, über die die Detektoreinheiten (4) bzw. die Regel-/Auswerteeinheit (13) mit einer entfernten Kontrollstelle kommunizieren.

**13.** Vorrichtung nach einem oder mehreren der vorhergehenden Ansprüche,
**dadurch gekennzeichnet,**
**daß** eine Eingaben/Ausgabeeinheit (14) vorgesehen ist, über die das Bedienpersonal eine beliebige Detektoreinheit (4) als Überfüllsicherung auswählen kann, und
**daß** die Regel-/Auswerteeinheit (13) über die Eingabe-/Ausgabeeinheit (14) eine entsprechende Meldung abgibt, sobald der vorgegebene Füllstand (L) erreicht ist.

**14.** Vorrichtung nach Anspruch 1,
**dadurch gekennzeichnet,**
**daß** die Regel-/Auswerteeinheit (13) ein Dichteprofil des in dem Behälter (6) angeordneten Füllguts (8) erstellt und
**daß** die Regel-/Auswerteeinheit (13) dem Bedienpersonal das Dichteprofil zwecks Prozeßanalyse und/oder zu Regelungszwecken zur Verfügung stellt.

## Claims

**1.** Unit (1) for determining and/or monitoring the level of a product (8) in a container (6),

- wherein an emitting unit (2) is provided that emits radioactive radiation,
- wherein a receiver unit (3) is provided, which is arranged in such a way that it receives the radioactive radiation
- wherein a control/evaluation unit (13) is provided and determines the level of the product (8) in the container (6) based on the measurement data provided by the receiver unit (3), and
- wherein the receiver unit (3) consists of individual detector units (4)

-- wherein the detector units (4) are positioned at different distances from the floor of the container (6) in such a way that every detector unit (4) detects the radiation part which the emitting unit (2) emits in its direction and which passes through a defined part of the container (6),

**characterized in that**

-- the control/evaluation unit (13) is designed in such a way that it queries the detector units (4) one after another via a bus line and evaluates the transmitted measurement data in succession,

- the emitting unit (2) is a punctiform emitting unit (2) arranged in the upper area of the container (6), and
- the control/evaluation unit (13) is designed in such a way that it creates an intensity profile $(I(h))$ over the height of the overall level measuring range and - on the basis of the intensity profile $(I(h))$ and an intensity pattern $(I_0(h))$ determined and saved in advance with an empty container (6) - determines a ratio $(I(h)/I_0(h))$ between the intensity profile $(I(h))$ and the intensity pattern $(I_0(h))$ and determines the level based on a shift in the ratio $(I(h)/I_0(h))$ to values less than one.

**2.** Unit as claimed in Claim 1,
**characterized in that**
a detector unit (4) is a solid state detector or a liquid detector.

**3.** Unit as claimed in Claim 1,
**characterized in that**
a detector unit (4) is a plastic scintillator or a crystal scintillator with a downstream photomultiplier or with a downstream PIN diode.

**4.** Unit as claimed in Claim 1 or 2,
**characterized in that**
a detector unit (4) is a semiconductor detector, e.g. a CdZnTe detector.

**5.** Unit as claimed in Claim 1, 2, 3 or 4,
**characterized in that**
the detector units (4) are either individual detectors or are made up of several individual detectors that are arranged in such a way that they form a detector array (5).

**6.** Unit as claimed in Claim 1, 2, 3, 4 or 5,
**characterized in that**
at least a first additional detector unit (9) is provided which is arranged above a predefined maximum level (H) of the product (8) in the container (6), wherein the first additional detector unit (9) primarily only receives the radioactive radiation that is emitted by the emission unit (2) and does not interact with the product (8).

**7.** Unit as claimed in Claim 1, 2, 3, 4 or 5,
**characterized in that**
a pressure sensor (10) is provided which is arranged above a maximum height (H) of the product (8) in the container (6).

**8.** Unit as claimed in Claim 1, 6 or 7,
**characterized in that**
at least a second additional detector unit (11) is provided which is arranged in such a way that it primarily only detects the radioactive background radiation in the immediate vicinity of the container (6).

**9.** Unit as claimed in Claim 1, 2, 3, 4 or 5,
**characterized in that**
the distance between two consecutive detector units (4) is variable, wherein the distance is adjusted to the desired local activation.

**10.** Unit as claimed in Claim 1 or 9,
**characterized in that**
the detector units (4) are arranged in a prespecified quantity on a support element (12), wherein the support element (12) preferably has a flexible design.

**11.** Unit as claimed in one or more of the previous claims,
**characterized in that**

- the detector units (4) have a temperature dependency
- each detector unit (4) is assigned a temperature sensor which determines the temperature at the place of measurement, and
- the control/evaluation unit takes the local temperature at the place of measurement into consideration when evaluating the level measurement data.

**12.** Unit as claimed in one or more of the previous claims,
**characterized in that**
a bus line (17) is provided via which the detector units (4) or the control/evaluation unit (13) communicate with a remote control point.

**13.** Unit as claimed in one or more of the previous claims,
**characterized in that**
an input/output unit (14) is provided via which the operating staff can select any detector unit (4) as the overfill protector, and
**in that** the control/evaluation unit (13) issues a corresponding message via the input/output unit (14) as soon as the specified level (L) is reached.

**14.** Unit as claimed in Claim 1,
**characterized in that**
the control/evaluation unit (13) creates a density profile of the product (8) in the container (6) and
**in that** the control/evaluation unit (13) makes the density profile available to the operating staff for the purpose of process analysis and/or for control purposes.

**Revendications**

**1.** Dispositif (1) destiné à la détermination et/ou la surveillance du niveau de remplissage d'un produit (8) dans un réservoir (6),

- pour lequel est prévue une unité d'émission (2), qui émet un rayonnement radioactif,
- pour lequel est prévue une unité de réception (3), qui est disposée de telle manière à recevoir le rayonnement radioactif,
- pour lequel est prévue une unité de régulation / d'exploitation (13) qui, sur la base des données de mesure fournies par l'unité de réception (3), détermine le niveau de remplissage du produit (8) dans le réservoir (6), et
- pour lequel l'unité de réception (3) se compose d'unités de détecteur (4) - individuelles

-- les unités de détecteur (4) étant positionnées à différentes distances du fond du réservoir (6), de telle sorte que chaque unité de détecteur (4) détecte la part du rayonnement que l'unité d'émission (2) émet dans leur direction et qui traverse une partie définie du réservoir (6),

**caractérisé en ce que**

- l'unité de régulation / d'exploitation (13) est conçue de telle manière qu'elle interroge, par l'intermédiaire d'une ligne de bus, successivement les unités de détecteur (4), et exploite ensuite les données de mesure transmises,
- l'unité d'émission (2) est une unité d'émission (2) disposée en forme de points dans la zone supérieure du réservoir (6), et **en ce que**
- l'unité de régulation / d'exploitation (13) est conçue de telle manière à ce qu'elle crée un profil d'intensité ($I(h)$) sur la hauteur de la totalité de la plage de mesure de niveau, et à ce qu'elle détermine, sur la base du profil d'intensité ($I(h)$) et d'une courbe d'intensité ($I_0(h)$) déterminée et enregistrée au préalable avec réservoir (6) vide, sur la plage de mesure du niveau, un rapport ($I(h)/I_0(h)$) entre le profil d'intensité ($I(h)$) et la courbe d'intensité ($I_0(h)$) et détermine le niveau de remplissage sur la base d'un passage du rapport ($I(h)/I_0(h)$) à des valeurs inférieures à un.

**2.** Dispositif selon la revendication 1,
**caractérisé en ce**
**que**, concernant une unité de détecteur (4), il s'agit d'un détecteur de corps solide ou d'un détecteur de liquide.

**3.** Dispositif selon la revendication 1,
**caractérisé en ce**
**que**, concernant une unité de détecteur (4), il s'agit d'un scintillateur en matière plastique ou d'un scintillateur cristallin avec un photomultiplicateur couplé en aval ou une diode PIN couplée en aval.

**4.** Dispositif selon la revendication 1 ou 2,
**caractérisé en ce**
**que**, concernant une unité de détecteur (4), il s'agit d'un détecteur à semiconducteur, p. ex. d'un détecteur CdZnTe.

**5.** Dispositif selon la revendication 1, 2, 3 ou 4,
**caractérisé en ce**

**que** les unités de détecteur (4) sont soit des détecteurs individuels, soit sont composés de plusieurs détecteurs individuels, qui sont disposés de telle sorte à former une matrice de détecteurs (5).

6. Dispositif selon la revendication 1, 2, 3, 4 ou 5,
**caractérisé en ce**
**qu'**est prévue au moins une première unité de détecteur (9) supplémentaire, qui est disposée au-dessus d'une hauteur de remplissage (H) maximale prédéfinie du produit (8) dans le réservoir (6), la première unité de détecteur (9) supplémentaire recevant pour l'essentiel uniquement le rayonnement radioactif émis par l'unité d'émission (2), qui n'est pas entré en interaction avec le produit (8).

7. Dispositif selon la revendication 1, 2, 3, 4 ou 5,
**caractérisé en ce**
**qu'**est prévu un capteur de pression (10), qui est disposé au-dessus d'une hauteur de remplissage (H) maximale prédéfinie du produit (8) dans le réservoir (6).

8. Dispositif selon la revendication 1, 6 ou 7,
**caractérisé en ce**
**qu'**est prévue au moins une deuxième unité de détecteur (8) supplémentaire (11), qui est disposée de telle manière qu'elle ne détecte pour l'essentiel que le rayonnement d'arrière-plan radioactif dans l'environnement immédiat du réservoir (6).

9. Dispositif selon la revendication 1, 2, 3, 4 ou 5,
**caractérisé en ce**
**que** la distance entre deux unités de détecteur (4) consécutives est conçue de façon variable, la distance étant ajustée par rapport à chaque déclenchement local souhaité.

10. Dispositif selon la revendication 1 ou 9,
**caractérisé en ce**
**que** les unités de détecteur (4) sont disposées selon un nombre prédéfini sur un élément support (12), l'élément support (12) étant conçu de préférence de façon flexible.

11. Dispositif selon l'une ou plusieurs des revendications précédentes, **caractérisé en ce**

- **que** les unités de détecteur (4) présentent une dépendance de la température,
- **qu'**à chaque unité de détecteur (4) est attribué un capteur de température, qui détermine la température sur le point de mesure, et
- en ce que l'unité de régulation / d'exploitation (13) tient compte, lors de l'exploitation des données de mesure de niveau, de la température régnant au point de mesure.

12. Dispositif selon l'une ou plusieurs des revendications précédentes,
**caractérisé en ce**
**qu'**est prévue une ligne de bus (17), par l'intermédiaire de laquelle les unités de détecteur (4) ou l'unité de régulation / d'exploitation (13) communique avec un poste de contrôle distant.

13. Dispositif selon l'une ou plusieurs des revendications précédentes,
**caractérisé en ce**
**qu'**est prévue une unité d'entrée / de sortie (14), par l'intermédiaire de laquelle le personnel de service peut sélectionner une unité de détecteur (4) quelconque en tant que sécurité de trop-plein, et
en ce que l'unité de régulation / d'exploitation (13) délivre par l'intermédiaire de l'unité d'entrée / de sortie (14) un message correspondant, sitôt que le niveau de remplissage (L) prévu est atteint.

14. Dispositif selon la revendication 1,
**caractérisé en ce**
**que** l'unité de régulation / d'exploitation (13) crée un profil de densité du produit (8) disposé dans le réservoir (6) et en ce que l'unité de régulation / d'exploitation (13) met à la disposition du personnel de service le profil de densité à des fins d'analyse du process et/ou à des fins de régulation.

Fig. 1

## Fig.2

Füllstandsmessung

# Fig.3

**Füllstandsmessung**

Fig. 4

Fig. 5

Fig. 6

Fig. 7

# Fig. 8

$$\mu = \ln(S1/S2)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6104033 A
- US 4369368 A